# EUROPÄISCHE PATENTSCHRIFT

(11) **EP 2 236 843 B1**
(45) Veröffentlichungstag und Bekanntmachung des Hinweises auf die Patenterteilung: **03.05.2017**
(21) Anmeldenummer: 10002794.5
(22) Anmeldetag: 17.03.2010
(51) Int. Cl.: F16B 41/00

(54) **Anordnung, bestehend aus einer Schraube sowie einer an der Schraube befestigten Verliersicherung**
Assembly consisting of a screw and a device preventing loss attached to the screw
Agencement composé d'une vis ainsi que d'une sécurité anti-perte fixée sur la vis

(30) Priorität: 01.04.2009 DE 102009015245
(43) Veröffentlichungstag der Anmeldung: 06.10.2010
(73) Patentinhaber: Rheinmetall Landsysteme GmbH, 29345 Unterlüß (DE)
(72) Erfinder: Witt, Tino, 24146 Kiel (DE)
(74) Vertreter: Dietrich, Barbara

(56) Entgegenhaltungen:
- GB-A- 2 268 561
- US-A1- 2003 210 968

## Beschreibung

Die Erfindung betrifft eine Anordnung, bestehend aus einer Schraube mit einem Schraubenkopf und einem Schraubenschaft sowie einer an der Schraube befestigten Verliersicherung.

Derartige Anordnungen sind beispielsweise aus dem Dokument DE 93 08 096 U1 bekannt, wobei die Verliersicherungen beispielsweise aus Spreng- oder Federringen bestehen können, die im Bereich des überstehenden Schraubenschaftes in einen Gewindegang des Schraubengewindes oder in eine umlaufende Nut des Schraubenschaftes einrasten, sodass ein Verlust der Schraube vermieden wird, wenn diese sich löst oder bestimmungsgemäß gelöst wird.

Nachteilig ist bei derartigen Sicherungsmaßnahmen, dass es beim Austausch der durch die Schraube verbundenen Teile zu einer Beschädigung der Gewinde durch die zu entfernenden Spreng- oder Federringe kommen kann. Außerdem können die entsprechenden Schrauben anschließend leicht verlegt werden.

Sofern überdies der Schraubenschaft eine umlaufende Nut aufweist, kann die entsprechende Schraube im Bedarfsfall nicht durch eine einfache Normschraube ersetzt werden. Vielmehr muss in die Normschraube erst die Nut eingebracht werden, was mit zusätzlichen Kosten verbunden ist und die Festigkeit der Schraube negativ beeinflussen kann, wenn die Nut zwischen Schraubenkopf und Einschraubbereich liegt. Soll die entsprechende Schraube eine ausreichende Festigkeit trotz umlaufender Nut zwischen Schraubenkopf und Einschraubbereich aufweisen, muss bei Verwendung von Normschrauben der Schraubendurchmesser größer gewählt werden, als dieses ohne umlaufende Nut erforderlich wäre. Da aber der Gewindedurchmesser durch die zu verbindenden Teile in der Regel vorgegeben ist, können in der Regel nur Spezialschrauben (z.B. gehärtete Schrauben mit kleinem Gewindedurchmesser) verwendet werden und auch ein Nachrüsten der Anordnung mittels Normschraube ist nicht ohne weiteres möglich.

Aus der GB 2 268 561 A ist eine Sicherung bekannt, die das Lösen der Schraube bzw. eines Bolzens beispielsweise durch Unberechtigte verhindert. Hierbei wird der Schraubenkopf mit einem Schloss versehen und damit unzugänglich gemacht. Am Schraubenkopf ist eine Art Gabel eingebunden, die zur Aufnahme des Schlosses dient. Löst man das Schloss, um die Schraube drehen zu können, sind die Schraube als auch alle anderen Teile verlierbar.

Der Erfindung liegt die Aufgabe zugrunde, eine kostengünstige Anordnung der eingangs erwähnten Art anzugeben, bei welcher Normschrauben verwendbar sind, ohne dass deren Festigkeit durch die zugeordnete Verliersicherung negativ beeinträchtigt wird. Außerdem soll die entsprechende Schraube auch nach ihrem Entfernen aus den zu verschraubenden Teilen gegen ein Verlieren gesichert werden können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass die Verliersicherung ein den Schraubenschaft der Schraube umschließendes ringförmiges Teil umfasst, welches sich im wesentlichen direkt an den Schraubenkopf anschließt und mit dem Schraubenschaft fest verbunden ist, wobei das ringförmige Teil eine Ringnut enthält, in der eine Scheibe zwar drehbar, aber axial nicht verschiebbar gelagert ist. Diese Scheibe besitzt einen äußeren Randbereich, der mindestens in einem Teilbereich radial über das ringförmige Teil hervorsteht, wobei in diesem Teilbereich eine Befestigungseinrichtung für ein Sicherungselement angeordnet ist.

Bei einer bevorzugten Ausführungsform der Erfindung befindet sich die Ringnut auf der dem Schraubenkopf zugewandten Seite und ist, im Querschnitt gesehen, im Wesentlichen U-förmig ausgebildet. Dabei wird der eine Schenkel der Ringnut durch einen nach außen vorspringenden Absatz des ringförmigen Teiles und der andere Schenkel durch die dem ringförmigen Teil zugewandte Seitenfläche des Schraubenkopfes gebildet. Vorzugsweise handelt es sich bei dem ringförmigen Teil um einen Gewindering, der bis in seine Endposition auf den Schraubenschaft aufgeschraubt und durch einen Kleber (d.h. durch eine flüssige Schraubensicherung) kraftschlüssig mit dem Schraubenschaft verbunden ist.

Bei der Schraube kann es sich beispielsweise um eine Sechskantschraube oder um eine Zylinderschraube handeln, deren jeweiliger Schraubenschaft ein bis zum Schraubenkopf reichendes Außengewinde aufweist.

Die drehbare Scheibe kann als Befestigungseinrichtung beispielsweise eine Bohrung aufweisen, durch welche das Ende einer als Sicherungselement dienende Kette hindurchgeführt ist.

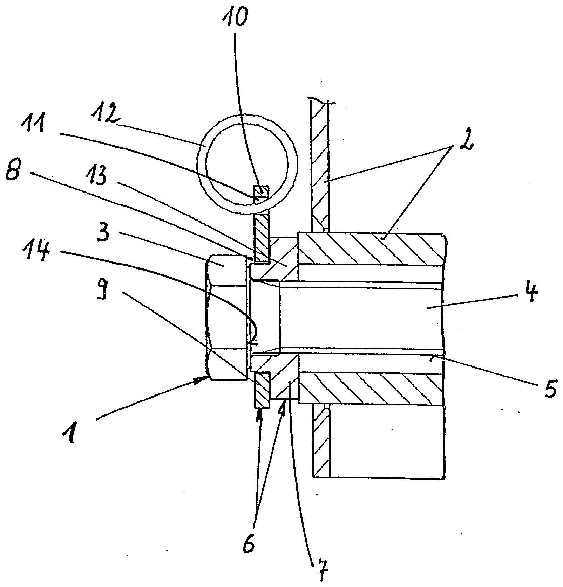

Weitere Einzelheiten und Vorteile der Erfindung ergeben sich aus dem folgenden, anhand einer Figur erläuterten Ausführungsbeispiel. Dabei gibt die Figur den Teilbereich einer erfindungsgemäßen Anordnung mit einem zu verbindenden Teil wieder.

In der Figur ist mit 1 eine Sechskantschraube (beispielsweise eine Normschraube) bezeichnet, die ein zu befestigendes erstes Teil 2 mit einem nicht dargestellten zweiten Teil verbindet. Die Sechskantschraube 1 besteht aus einem Schraubenkopf 3 und einem sich daran anschließenden Schraubenschaft 4, wobei sich das Außengewinde 5 des Schraubenschaftes 4 bis in die unmittelbare Nähe des Schraubenkopfes 3 erstreckt.

Schraubenkopfseitig ist an der Sechskantschraube 1 eine Verliersicherung 6 befestigt. Diese umfasst ein den Schraubenschaft 4 umschließendes ringförmiges Teil 7, welches sich im Wesentlichen direkt an den Schraubenkopf 3 anschließt und mit dem Schraubenschaft 4 fest verbunden ist. Hierzu ist das ringförmige Teil 7 als Gewindering ausgebildet, der bis in seine Endposition auf den Schraubenschaft 4 aufgeschraubt und mit Hilfe eines Klebers kraftschlüssig mit dem Schraubenschaft 4 verbunden ist.

Das ringförmige Teil 7 enthält eine Ringnut 8, in der eine Scheibe 9 drehbar gelagert ist, deren äußerer Randbereich 10 radial über das ringförmige Teil 7 hervorsteht. In dem überstehenden Randbereich 10 der Scheibe 9 ist eine Bohrung 11 als Befestigungseinrichtung für ein Sicherungselement 12 vorgesehen, bei dem es sich in dem dargestellten Ausführungsbeispiel um eine Kette handelt, die mit einem der beiden mit der Schraube 1 zu verbindenden Teile verbunden ist (nicht dargestellt).

Wie der Figur entnommen werden kann, befindet sich die Ringnut 8 auf der dem Schraubenkopf 3 zugewandten Seite und ist, im Querschnitt gesehen, im wesentlichen U-förmig ausgebildet, wobei der eine (längere) Schenkel der Ringnut 8 durch einen nach außen vorspringenden Absatz 13 des ringförmigen Teiles 7 und der andere (kürzere) Schenkel durch die dem ringförmigen Teil 7 zugewandte Seitenfläche 14 des Schraubenkopfes 3 gebildet wird.

Die Erfindung ist selbstverständlich nicht auf das in der Figur dargestellte Ausführungsbeispiel beschränkt. So kann als Schraube statt einer Sechskantschraube auch eine andere Kopfschraube, beispielsweise eine Zylinderschraube, verwendet werden.

Ferner kann die U-förmige Ringnut derart in dem ringförmigen Teil angeordnet sein, dass beide Schenkel durch das ringförmige Teil gebildet werden und außerdem etwa die gleiche Länge aufweisen.

### Bezugszeichenliste

- 1: Schraube, Sechskantschraube
- 2: (erstes) Teil
- 3: Schraubenkopf
- 4: Schraubenschaft
- 5: Außengewinde
- 6: Verliersicherung
- 7: ringförmiges Teil
- 8: Ringnut
- 9: Scheibe
- 10: äußerer Randbereich
- 11: Befestigungseinrichtung, Bohrung
- 12: Sicherungselement, Kette
- 13: Absatz
- 14: Seitenfläche

## Patentansprüche

1. Anordnung, bestehend aus einer Schraube (1) mit einem Schraubenkopf (3) und einem Schraubenschaft (4) sowie einer an der Schraube (1) befestigten Verliersicherung (6), **dadurch gekennzeichnet, dass**
- die Verliersicherung (6) ein den Schraubenschaft (4) umschließendes ringförmiges Teil (7) umfasst, welches sich im Wesentlichen direkt an den Schraubenkopf (3) anschließt und mit dem Schraubenschaft (4) fest verbunden ist,
- das ringförmige Teil (7) eine Ringnut (8) enthält, in der eine Scheibe (9) drehbar gelagert ist, welche einen äußeren Randbereich (10) aufweist, der mindestens in einem Teilbereich radial über das ringförmige Teil (7) außenseitig hervorsteht, und
- in diesem äußeren Randbereich (10) eine Befestigungseinrichtung (11) für ein Sicherungselement (12) angeordnet ist.

2. Anordnung nach Anspruch 1, **dadurch gekennzeichnet, dass** sich die Ringnut (8) auf der dem Schraubenkopf (3) zugewandten Seite des ringförmigen Teiles (7) befindet und, im Querschnitt gesehen, im wesentlichen U-förmig ausgebildet ist, wobei der eine Schenkel der Ringnut (8) durch einen nach außen vorspringenden Absatz (13) des ringförmigen Teiles (7) und der andere Schenkel durch die dem ringförmigen Teil (7) zugewandte Seitenfläche (14) des Schraubenkopfes (3) gebildet wird.

3. Anordnung nach Anspruch 1 oder 2, **dadurch gekennzeichnet, dass** es sich bei dem ringförmigen Teil (7) um einen Gewindering handelt, der bis in seine Endposition auf den Schraubenschaft (4) aufgeschraubt und durch einen Kleber kraftschlüssig mit dem Schraubenschaft (4) verbunden ist.

4. Anordnung nach einem der Ansprüche 1 bis 3, **dadurch gekennzeichnet, dass** es sich bei der Schraube um eine Sechskantschraube (1) oder um eine Zylinderschraube handelt, deren jeweiliger Schraubenschaft (4) ein bis zu dem entsprechenden Schraubenkopf (3) reichendes Außengewinde (5) besitzt.

5. Anordnung nach einem der Ansprüche 1 bis 4, **dadurch gekennzeichnet, dass** die drehbare Scheibe (9) eine Bohrung (11) aufweist, durch welche das Ende einer als Sicherungselement (12) dienenden Kette hindurchgeführt ist.

## Claims

1. Arrangement comprising a screw (1) having a screw head (3) and a screw shank (4) and also comprising a retainer (6), which is fastened on the screw (1), **characterized in that**
- the retainer (6) comprises an annular part (7) which encloses the screw shank (4), adjoins the screw head (3) essentially directly and is fixed to the screw shank (4),
- the annular part (7) contains an annular groove (8) in which a washer (9) is mounted in a rotatable manner, said washer having an outer peripheral region (10), at least part of which projects radially beyond the annular part (7) on the outside, and
- a fastening device (11) for a securing element (12) is arranged in said outer peripheral region (10).

2. Arrangement according to Claim 1, **characterized in that** the annular groove (8) is located on that side of the annular part (7) which is directed towards the screw head (3) and, as seen in cross section, it is of essentially U-shaped design, wherein the one limb of the annular groove (8) is formed by an outwardly projecting shoulder (13) of the annular part (7) and the other limb is formed by the side surface (14) of the screw head (3), said side surface being directed towards the annular part (7).

3. Arrangement according to Claim 1 or 2, **characterized in that** the annular part (7) is a threaded ring which is screwed onto the screw shank (4) as far as its end position and is connected to the screw shank (4) in a force-fitting manner by an adhesive.

4. Arrangement according to one of Claims 1 to 3, **characterized in that** the screw is a hexagon screw (1) or a cylinder screw, of which the respective screw shank (4) has an external thread (5) which extends as far as the corresponding screw head (3).

5. Arrangement according to one of Claims 1 to 4, **characterized in that** the rotatable washer (9) has a bore (11), through which is guided the end of a chain serving as securing element (12).

## Revendications

1. Ensemble constitué d'une vis (1) dotée d'une tête (3) de vis et d'une tige (4) de vis ainsi que d'une protection (6) anti-détachement fixée sur la vis (1), **caractérisé en ce que**
la protection (6) anti-détachement comporte une partie annulaire (7) qui entoure la tige (4) de la vis, qui se raccorde essentiellement directement à la tête (3) de la vis et qui est reliée solidairement à la tige (4) de la vis,
**en ce que** la partie annulaire (7) contient une rainure annulaire (8) dans laquelle est monté à rotation un disque (9) qui présente une partie (10) de bord extérieur qui déborde radialement à l'extérieur de la partie annulaire (7) au moins dans une partie et
**en ce qu'**un dispositif de fixation (11) d'un élément de protection (12) est disposé dans cette partie de bord extérieur (10).

2. Ensemble selon la revendication 1, **caractérisé en ce que** la rainure annulaire (8) est située sur le côté de la partie annulaire (7) tourné vers la tête (3) de la vis et, vu en section transversale, présente essentiellement la forme d'un U et **en ce qu'**une branche de la rainure annulaire (8) est formée par un appendice (13) en saillie extérieure de la partie annulaire (7) et l'autre branche par la surface latérale (14) de la tête (3) de la vis tournée vers la partie annulaire (7).

3. Ensemble selon les revendications 1 ou 2, **caractérisé en ce que** la partie annulaire (7) est un anneau fileté vissé jusqu'à une position d'extrémité sur la tige (4) de la vis et relié en correspondance mécanique à la tige (4) de la vis à l'aide d'un adhésif.

4. Ensemble selon l'une des revendications 1 à 3, **caractérisé en ce que** la vis est une vis (1) à six pans ou une vis cylindrique dont la tige (4) possède un filet extérieur (5) qui s'étend jusqu'à la tête (3) de la vis concernée.

5. Ensemble selon l'une des revendications 1 à 4, **caractérisé en ce que** la plaque rotative (9) présente un alésage (11) par lequel l'extrémité d'une chaîne qui sert d'élément de protection (12) est passée.
